# EUROPEAN PATENT APPLICATION

(11) **EP 4 546 824 A1**
(43) Date of publication of application: **30.04.2025**
(21) Application number: 23829704.8
(22) Date of filing: 06.05.2023
(51) Int. Cl.: H04W 4/02

(54) **POSITIONING METHOD, TERMINAL, BASE STATION, AND COMPUTER READABLE STORAGE MEDIUM**

(30) Priority: 01.07.2022 CN 202210766278
(71) Applicant: ZTE Corporation, Shenzhen, Guangdong 518057 (CN)
(72) Inventor: LUO, Yibao, Shenzhen, Guangdong 518057 (CN); CUI, Qiaoyun, Shenzhen, Guangdong 518057 (CN); JIA, Rong, Shenzhen, Guangdong 518057 (CN)
(74) Representative: Ziebig Hengelhaupt Intellectual Property Attorneys Patentanwaltskanzlei PartGmbB
(86) International application number: PCT/CN2023/092527
(87) International publication number: WO 2024/001518

(57) **Abstract**

The present application discloses a positioning method, a terminal, a base station, and a computer readable storage medium. The positioning method comprises: acquiring a first frequency-modulated continuous wave signal and a reference error parameter which are sent by a base station (S110); acquiring a terminal local oscillator signal, and performing error compensation on the terminal local oscillator signal according to the reference error parameter to obtain a target local oscillator signal (S120); and performing signal processing on the first frequency-modulated continuous wave signal and the target local oscillator signal to obtain first position information, wherein the first position information is position information of the terminal relative to the base station (S130).

## Description

### CROSS-REFERENCE TO RELATED APPLICATIONS

The present application is proposed based on and claims priority to Chinese Application No. 202210766278.4, filed on July 1, 2022, the disclosure of which is hereby incorporated by reference in its entirety.

### TECHNICAL FIELD

The present application relates to but is not limited to the field of wireless communication technology, and in particular to a positioning method, a terminal, a base station and a computer readable storage medium.

### BACKGROUND

The existing small space positioning technologies that do not rely on the Global Positioning System GPS mainly include: Wireless Network Communication Technology Wi-Fi, Bluetooth, infrared, Radio Frequency Identification (RFID) technology, ZigBee Wireless Technology and Ultrasonic Technology, etc. The above-mentioned small space positioning technologies basically use Time of Flight Measurement (TOF) to achieve positioning. However, TOF is a two-way ranging technology, which mainly uses the flight time of a signal between two asynchronous transceivers to measure the distance between nodes. The accuracy and real-time capability of this ranging technology are relatively poor, resulting in low positioning accuracy.

### SUMMARY

The embodiments of the present application provide a positioning method, a terminal, a base station and a computer readable storage medium.

In a first aspect, an embodiment of the present application provides a positioning method, which is applied to a terminal, the terminal is communicated with a base station, the method comprises: acquiring a first frequency-modulated continuous wave signal and a reference error parameter sent by a base station; acquiring a terminal local oscillator signal, and performing error compensation on a terminal local oscillator signal according to the reference error parameter to obtain a target local oscillator signal; performing signal processing on the first frequency-modulated continuous wave signal and the target local oscillator signal to obtain first position information, wherein the first position information is position information of the terminal relative to the base station.

In a second aspect, an embodiment of the present application provides a positioning method, which is applied to a target base station, the target base station is respectively communicated with a terminal and a calibration device, the method comprises: acquiring a base station local oscillator signal of the target base station, and performing signal processing on the base station local oscillator signal to obtain a first frequency-modulated continuous wave signal; obtaining a reference error parameter from the calibration device according to the first frequency-modulated continuous wave signal; sending the first frequency-modulated continuous wave signal and the reference error parameter to the terminal, causing the terminal to perform error compensation on a terminal local oscillator signal according to the reference error parameter to obtain a target local oscillator signal, and to perform signal processing on the first frequency-modulated continuous wave signal and the target local oscillator signal to obtain a first position information, wherein the first position information is position information of the terminal relative to the target base station.

In a third aspect, an embodiment of the present application provides a terminal, comprising a memory, a processor and a computer program stored in the memory and executable on the processor, and when executed by the processor, causing the processor to implement the positioning method recited in the first aspect.

In a fourth aspect, an embodiment of the present application provides a base station, comprising a memory, a processor and a computer program stored in the memory and executable on the processor, and when executed by the processor, causing the processor to implement the positioning method recited in the second aspect.

In a fifth aspect, an embodiment of the present application provides a computer readable storage medium, having a computer-executable instruction stored thereon, wherein the computer-executable instruction is used to implement the positioning method recited in the first aspect, or implement the positioning method recited in the second aspect.

### BRIEF DESCRIPTION OF DRAWINGS

FIG. 1 s a flowchart of the steps of the positioning method provided by the embodiment of the present application;
FIG. 2 is a flowchart of the steps of obtaining a first position information provided by another embodiment of the present application;
FIG. 3 is a flowchart of the steps of performing signal amplification on a frequency-modulated continuous wave provided by another embodiment of the present application;
FIG. 4 is a flowchart of the steps of mapping a first position information and a first coordinate system to a virtual coordinate system provided by another embodiment of the present application;
FIG. 5 is a flowchart of the steps of the positioning method provided by another embodiment of the present application;
FIG. 6 is a flowchart of the steps of mapping a target position information and a target coordinate system to a virtual coordinate system provided by another embodiment of the present application;
FIG. 7 is a flowchart of the steps of the positioning method provided by another embodiment of the present application;
FIG. 8 is a flowchart of the steps of acquiring a reference error parameter provided by another embodiment of the present application;
FIG. 9 is a flowchart of the steps of performing signal processing on a first frequency-modulated continuous wave signal provided by another embodiment of the present application;
FIG. 10 is a module schematic diagram of a base station provided by another embodiment of the present application;
FIG. 11 is a module schematic diagram of a terminal provided by another embodiment of the present application;
FIG. 12 is a structural diagram of a positioning system provided by another embodiment of the present application;
FIG. 13 is a flowchart of the steps of transmitting a first frequency-modulated continuous wave signal provided by another embodiment of the present application;
FIG. 14 is a flowchart of the steps of acquiring a first position information provided by another embodiment of the present application;
FIG. 15 is a structural diagram of a terminal provided by another embodiment of the present application;
FIG. 16 is a structural diagram of a base station provided by another embodiment of the present application.

### DETAILED DESCRIPTION

In order to make the purpose, technical solution and advantages of the present application clearer, the present application is further described in detail below in conjunction with the accompanying drawings and embodiments. It should be understood that the specific embodiments described herein are only used to explain the present application and are not used to limit the present application.

It can be understood that although the functional modules are divided in the device schematic diagram and the logical order is shown in the flowchart, in some cases, the steps shown or described can be performed in a different order than the module division in the device or the order in the flowchart. The terms "first", "second", etc. in the specification, claims or the above-mentioned drawings are used to distinguish similar objects, and are not necessarily used to describe a specific order or sequence.

The present application provides a positioning method, a terminal, a base station, a computer readable storage medium, wherein the positioning method comprises: acquiring a first frequency-modulated continuous wave signal and a reference error parameter sent by a base station; acquiring a terminal local oscillator signal, and performing error compensation on a terminal local oscillator signal according to the reference error parameter to obtain a target local oscillator signal; performing signal processing on the first frequency-modulated continuous wave signal and the target local oscillator signal to obtain first position information, wherein the first position information is position information of the terminal relative to the base station. Compared with the positioning scheme based on TOF ranging technology with low positioning accuracy in the related art, the embodiment of the present application can realize the positioning of the terminal only based on the frequency-modulated continuous wave signal sent by the receiving base station and the terminal local oscillator signal of the terminal itself, and the reference error parameter sent to the terminal by the base station, reduces the error of the terminal local oscillator signal, and can effectively improve the accuracy of terminal positioning.

The embodiment of the present application is further described below in conjunction with the accompanying drawings.

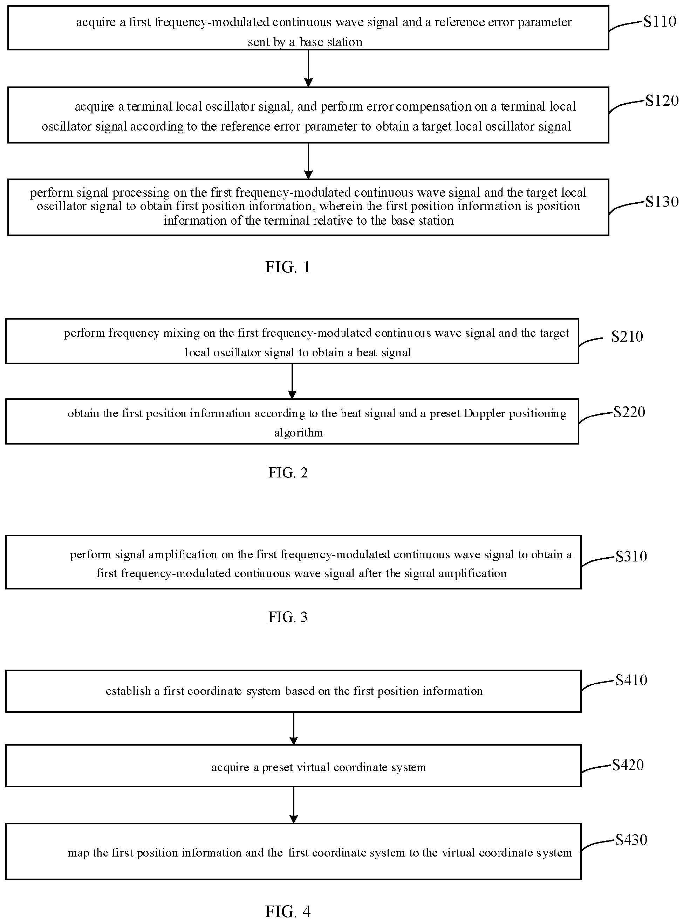

As shown in FIG. 1, which is a flowchart of a positioning method provided by an embodiment of the present application. The embodiment of the present application provides a positioning method, which is applied to a terminal, the terminal is communicated with a base station. The positioning method includes but is not limited to the following steps:
In Step S110, a first frequency-modulated continuous wave signal and a reference error parameter sent by the base station are acquired.

It can be understood that the first frequency-modulated continuous wave signal received by the terminal is a continuous wave ranging signal with variable bandwidth and frequency obtained by signal processing based on the base station local oscillator signal of the base station itself; since both the base station and the terminal have a clock synchronization module, it can ensure that the base station local oscillator signal corresponding to the base station that transmits the first frequency-modulated continuous wave signal, is consistent with the terminal local oscillator signal, or there is a fixed frequency phase error between the base station local oscillator signal and the terminal local oscillator signal. Based on this, the terminal can perform signal processing such as self-beating according to the first frequency-modulated signal and the terminal local oscillator signal to obtain the position information of the terminal relative to the base station; However, since the terminal communicated with the base station will move within the coverage range of the base station signal, and the terminal will be affected by the current environmental factors, a Doppler frequency shift of relative movement will occur between the signal transmitting end, i.e. the base station, and the signal receiving end, i.e. the terminal. The reference error parameter is an error value of the first frequency-modulated continuous wave signal in a scenario where the base station and the terminal are interconnected, and can calibrate the frequency deviation error of the terminal local oscillator signal.

In Step S120, a terminal local oscillator signal is acquired, and error compensation is performed on the terminal local oscillator signal according to the reference error parameter to obtain a target local oscillator signal.

It can be understood that the embodiment of the present application does not limit the specific content of the first location information, which may include distance information and azimuth information of the terminal relative to the base station. Performing error compensation on a terminal local oscillator signal according to the reference error parameter to obtain a target local oscillator signal, can obtain the first position information with higher accuracy, that is, the actual position information of the terminal relative to the base station, and can provide an effective data basis.

In Step S130, signal processing is performed on the first frequency-modulated continuous wave signal and the target local oscillator signal to obtain first position information, wherein the first position information is position information of the terminal relative to the base station.

Compared with the positioning scheme based on TOF ranging technology with low real-time and low positioning accuracy in the related art, the embodiment of the present application can realize the positioning of the terminal only based on the frequency-modulated continuous wave signal sent by the receiving base station and the terminal local oscillator signal of the terminal itself, and the reference error parameter sent to the terminal by the base station, reduces the error of the terminal local oscillator signal, and can effectively improve the accuracy of terminal positioning.

In addition, referring to FIG. 2, in an embodiment, step S130 in the embodiment shown in FIG. 1 further includes but is not limited to the following steps:
In Step S210, frequency mixing is performed on the first frequency-modulated continuous wave signal and the target local oscillator signal to obtain a beat signal;
In Step S220, a first position information is obtained according to the beat signal and a preset Doppler positioning algorithm.

It can be understood that performing frequency mixing on the target local oscillator signal, which is obtained by performing error compensation on the reference error parameter, and the first frequency-modulated continuous wave signal to obtain the beat signal, and obtaining the first position information according to the beat signal and the preset Doppler positioning algorithm, can effectively improve the accuracy of the. The frequency mixing method and the Doppler positioning algorithm are well known to those skilled in the art, and will not be described in detail in the embodiments of the present application.

In addition, referring to FIG. 3, before executing step S130 in the embodiment shown in FIG. 1, the positioning method provided in the embodiment of the present application further includes but is not limited to the following steps:
In Step S310, signal amplification is performed on the first frequency-modulated continuous wave signal to obtain a first frequency-modulated continuous wave signal after the signal amplification.

It can be understood that performing the signal amplification on the first frequency-modulated continuous wave signal can improve the signal strength of the first frequency-modulated continuous wave signal, so that the terminal can receive a stable first frequency-modulated continuous wave signal with high signal strength, provide an effective data basis for the terminal to calculate accurate first position information.

In addition, referring to FIG. 4, after executing step S130 in the embodiment shown in FIG. 1, the positioning method provided in the embodiment of the present application further includes but is not limited to the following steps:
In Step S410, a first coordinate system is established based on the first position information;
In Step S420, a preset virtual coordinate system is acquired;
In Step S430, the first position information and the first coordinate system are mapped to the virtual coordinate system.

It can be understood that the embodiments of the present application do not limit the specific amount of the first position information. When at least two base station antennas for transmitting the first frequency-modulated continuous wave signal are provided in the base station, it is assumed that the base station is provided with two base station antennas, and the two base station antennas are installed at different positions of the base station. Performing the signal processing on the first frequency-modulated continuous wave signals emitted by different base station antennas respectively with the terminal local oscillator signal to obtain two first position information, and establishing a three-dimensional coordinate system between the base station and the terminal, i.e., the first coordinate system, based on these two first position information; acquiring a preset virtual coordinate system, which is a three-dimensional coordinate system of a virtual scene pre-set in an Augmented Reality (AR) device or a Virtual Reality (VR) device. Mapping the first position information and the first coordinate system to the virtual coordinate system, can reflect the three-dimensional position and motion trajectory of the terminal in the real time virtual space; those skilled in the art are familiar with the specific mapping method of mapping the first position information and the first coordinate system to the virtual coordinate system, which will not be elaborated here.

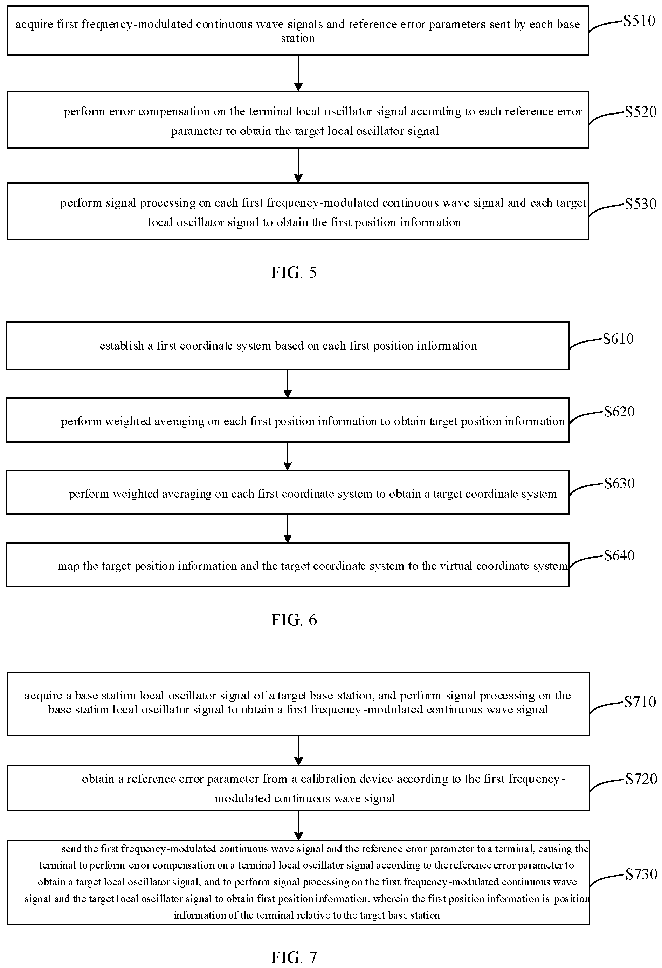

In addition, referring to FIG. 5, in an embodiment, the terminal is communicated with at least two base stations. In this case, the positioning method of the embodiment of the present application further includes but is not limited to the following steps:
In Step S510, first frequency-modulated continuous wave signals and reference error parameters sent by each base station are acquired;
In Step S520, error compensation is performed on a terminal local oscillator signal according to each reference error parameter to obtain a target local oscillator signal;
In Step S530, signal processing is performed on each first frequency-modulated continuous wave signal and each target local oscillator signal to obtain first position information.

In addition, referring to FIG. 6, in an embodiment, after executing Step S530 in the embodiment shown in FIG. 5, the positioning method provided in the embodiment of the present application further includes but is not limited to the following steps:
In Step S610, a first coordinate system is established based on each first position information;
In Step S620, weighted averaging is performed on each first position information to obtain target position information;
In Step S630, weighted averaging is performed on each first coordinate system to obtain a target coordinate system;
In Step S640, the target position information and the target coordinate system are mapped to a virtual coordinate system.

It can be understood that when the terminal is communicated with at least two base stations, that is, the terminal is within the signal coverage of a base station group, the terminal acquiring the first frequency-modulated continuous wave signals and the reference error parameters sent by each base station, performing the error compensation on the terminal local oscillator signal according to each reference error parameter to obtain the target local oscillator signal, performing the signal processing on each first frequency-modulated continuous wave signal and each target local oscillator signal to obtain the first position information, establishing the first coordinate system between the terminal and each base station based on each first position information, performing weighted averaging on each first position information, performing weighted averaging on each first coordinate system to obtain target coordinate system, which can effectively reduce the impact of multipath interference and environmental weather factors on the accuracy of the first position information and the first coordinate system. The target coordinate system and target position information calculated by weighted average are mapped to the virtual coordinate system of the AR device or VR device, which can reduce the error of frequency-modulated continuous wave signal ranging and positioning caused by fixed frequency deviation when the terminal is within the coverage of multiple base station signals, thereby effectively improving the accuracy of terminal positioning.

It can be understood that most of the existing base stations are timing base stations, and each base station is equipped with a clock synchronization module to meet the hardware conditions for ranging and positioning between the base station and the terminal through frequency-modulated continuous wave signals.

It can be understood that most of the existing base stations are Time-Transfer base stations, and each base station is equipped with a clock synchronization module to meet the hardware conditions for ranging and positioning between the base station and the terminal through frequency-modulated continuous wave signals. Based on the clock synchronization module of the base station, the base station is in an absolute global three-dimensional coordinate system with precise global positioning, and can obtain the absolutely accurate global positioning position information of the base station itself. Through the guidance of global positioning, the terminal can ensure the precise position switching of the terminal in the movement of different base station groups. Therefore, during the movement of the terminal, the target position information between the terminal and the AR device or VR device and the mapping scene of the target coordinate system can be limited to a few specific base stations, or can be switched among different base station groups.

In addition, referring to FIG. 7, the embodiment of the present application also provides a positioning method, which is applied to a target base station, the target base station is respectively communicated with the terminal and the calibration device, the method includes but is not limited to the following steps:
In Step S710, a base station local oscillator signal of a target base station is acquired, and signal processing is performed on the base station local oscillator signal to obtain a first frequency-modulated continuous wave signal;
In Step S720, a reference error parameter is obtained from a calibration device according to the first frequency-modulated continuous wave signal;
In Step S730, the first frequency-modulated continuous wave signal and the reference error parameter are sent to a terminal, causing the terminal to perform error compensation on a terminal local oscillator signal according to the reference error parameter to obtain a target local oscillator signal, and to perform signal processing on the first frequency-modulated continuous wave signal and the target local oscillator signal to obtain first position information, wherein the first position information is position information of the terminal relative to the target base station.

In the embodiment of the present application, the relative position between the calibration device and the target base station is fixed, and the target base station is communicated with the terminal, so that the target base station, the calibration device, and the terminal form a positioning system. The frequency deviation error caused by environmental changes or co-frequency wireless interference in the positioning system can be discovered by the calibration device, thereby initiating countermeasures to eliminate system interference. For example, after receiving the first frequency-modulated continuous wave signal sent by the target base station, the calibration device obtains an error value for the first frequency-modulated continuous wave signal, that is, a reference error parameter, and feeds the reference error parameter back to the base station. The target base station then sends the reference error parameter to the terminal to adjust the terminal's own terminal local oscillator signal, thereby improving the positioning accuracy of the terminal in the scenario of the positioning system.

The technical scheme and principle of this embodiment can refer to the embodiment shown in FIG. 1. The main difference is that the execution direction of the positioning method implemented in this embodiment is different from that of the positioning method in the embodiment shown in FIG. 1. This embodiment acts as a transmitter end of the first frequency-modulated continuous wave signal and the reference error parameter, and sends the first frequency-modulated continuous wave signal and the reference error parameter to a terminal, so that the terminal performs error compensation on the terminal local oscillator signal according to the reference error parameter to obtain the target local oscillator signal, and performs signal processing on the first frequency-modulated continuous wave signal and the target local oscillator signal to obtain position information of the terminal relative to the target base station, i.e., first location information. Other aspects are similar to the embodiment shown in FIG. 1, and for the sake of simplicity, no further details are given here.

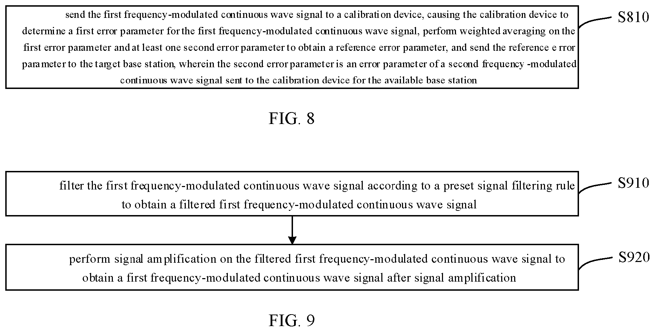

In addition, referring to FIG. 8, in an embodiment, the calibration device is further communicated with at least one available base station, and step S720 in the embodiment shown in FIG. 7 further includes but is not limited to the following steps:
In Step S810, the first frequency-modulated continuous wave signal is sent to a calibration device, causing the calibration device to determine a first error parameter for the first frequency-modulated continuous wave signal, perform weighted averaging on the first error parameter and at least one second error parameter to obtain a reference error parameter, and send the reference error parameter to the target base station, wherein the second error parameter is an error parameter of a second frequency-modulated continuous wave signal sent to the calibration device for the available base station.

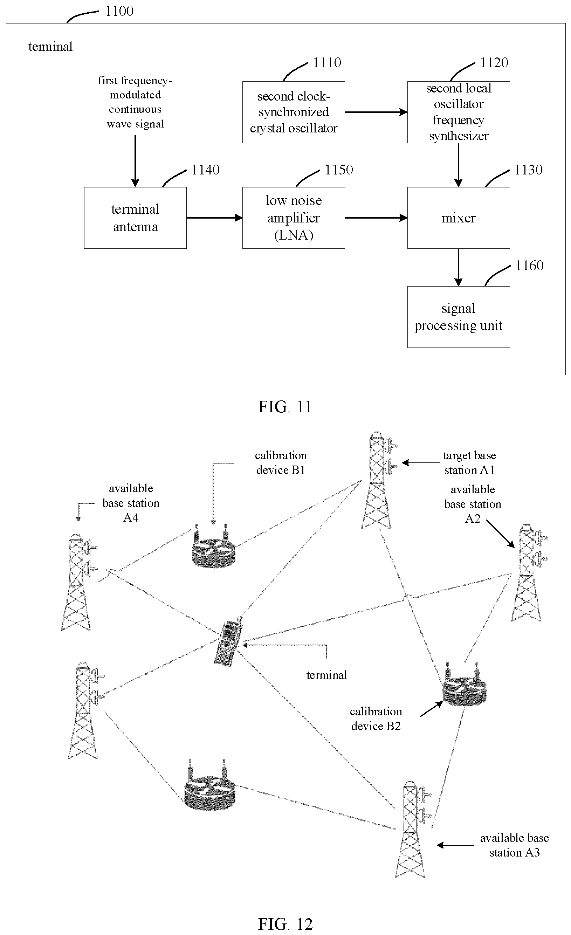

It can be understood that with reference to the description of the embodiment shown in FIG. 7, in the positioning system composed of the target base station, the calibration device, and the terminal, the calibration device is also communicated with at least one available base station, and the structure of the positioning system can be as shown in FIG. 12, which includes multiple base stations, the calibration device fixed relative to the base station, and the terminal moving within the signal coverage range of the multiple base stations. The embodiment of the present application does not limit the specific number of calibration devices in the multi-base station positioning system, nor does it limit the specific number of base stations to which the calibration device is connected. The calibration device may be connected to 2 or 3 base stations. As shown in FIG. 12, the calibration device B2 is respectively communicated with the target base station A1, the available base station A2, and the available base station A3; the calibration device B1 is communicated with the available base station A4 and the target base station A1; The embodiment of the present application is explained by taking the calibration device B1 as an example. When the terminal is close to the target base station A1 and the available base station A4, and only receives the frequency-modulated continuous wave signals of the target base station A1 and the available base station A4, the calibration device B1 receives the first frequency-modulated continuous wave signal sent by the target base station A1, receives the second frequency-modulated continuous wave signal sent by the available base station A4, and determines a first error parameter for the first frequency-modulated continuous wave signal, determines a second error parameter for the second frequency-modulated continuous wave signal, performs weighted averaging on the first error parameter and the second error parameter to obtain a reference error parameter, which can characterize the frequency deviation error between the calibration device B1, the available base station A4 and the target base station A1, and sends the reference error parameter to the target base station A1, so that the target base station A1 sends the reference error parameter to the terminal, and the terminal performs error compensation on the terminal local oscillator signal according to the reference error parameter to obtain the target local oscillator signal after error calibration.

The embodiment of the present application does not limit the specific manner in which the calibration device determines the error parameters of the frequency-modulated continuous wave signal or the second frequency-modulated continuous wave signal. It can be to train a pre-set error detection model by accumulating the frequency errors and environmental information of the frequency-modulated continuous wave signals sent by each base station to obtain a trained error detection model. The trained error detection model can improve the rate of determining the error parameters of the frequency-modulated continuous wave signal, thereby improving the rate of terminal positioning.

In addition, referring to FIG. 9, in an embodiment, before executing step S730 in the embodiment shown in FIG. 7, the positioning method provided in the embodiment of the present application also includes but is not limited to the following steps:
In Step S910, the first frequency-modulated continuous wave signal is filtered according to a preset signal filtering rule to obtain a filtered first frequency-modulated continuous wave signal;
In Step S920, signal amplification is performed on the filtered first frequency-modulated continuous wave signal to obtain a first frequency-modulated continuous wave signal after signal amplification.

It can be understood that before sending the first frequency-modulated continuous wave signal and the reference error parameter to the terminal, filtering the first frequency-modulated continuous wave signal to obtain the filtered first frequency-modulated continuous wave signal, can effectively filter out harmonic interference and image frequency interference; performing the signal amplification on the filtered first frequency-modulated continuous wave signal to obtain a first frequency-modulated continuous wave signal after signal amplification, can improve the signal strength of the first frequency-modulated continuous wave signal transmitted by the base station, thereby enabling the first frequency-modulated continuous wave signal received by the terminal to be more stable and have a greater signal strength, providing an effective data basis for the terminal to calculate accurate first position information.

In addition, in order to provide a more detailed explanation of the positioning method provided in the present application, the technical solution of the present application is described below with two specific examples.

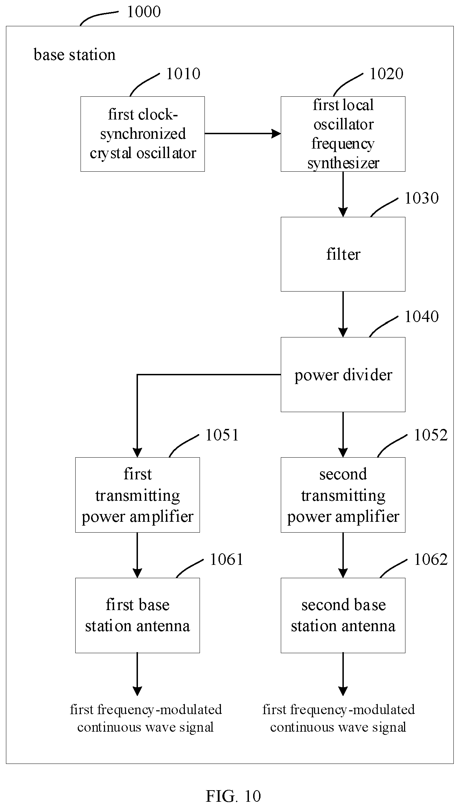

Refer to FIG. 10, which is a module diagram of the base station 1000 provided by another embodiment of the present application. The base station 1000 may include a first clock-synchronized crystal oscillator 1010, a first local oscillator frequency synthesizer 1020, a filter 1030, a power divider 1040, at least two transmitting power amplifiers and at least two base station antennas; the first clock-synchronized crystal oscillator 1010 is connected to the first local oscillator frequency synthesizer 1020, the first local oscillator frequency synthesizer 1020 is connected to the power divider 1040 through the filter 1030, the power divider 1040 is connected to two transmitting power amplifiers (a first transmitting power amplifier 1051 and a second transmitting power amplifier 1052), the first transmitting power amplifier 1051 is connected to the first base station antenna 1061, and the second transmitting power amplifier 1052 is connected to the second base station antenna 1062.

Referring to FIG. 11, which is a module diagram of a terminal 1100 provided in another embodiment of the present application. The terminal 1100 may include a terminal antenna 1140, a low noise amplifier (LNA) 1150, a second clock-synchronized crystal oscillator 1110, a second local oscillator frequency synthesizer 1120, a mixer 1130 and a signal processing unit 1160; the second clock-synchronized crystal oscillator 1110 is connected to the local oscillator frequency synthesizer 1120, the mixer 1130 is respectively connected to the LNA 1150, the local oscillator frequency synthesizer 1120 and the signal processing unit 1160, and the LNA 1150 is connected to the terminal antenna 1140.

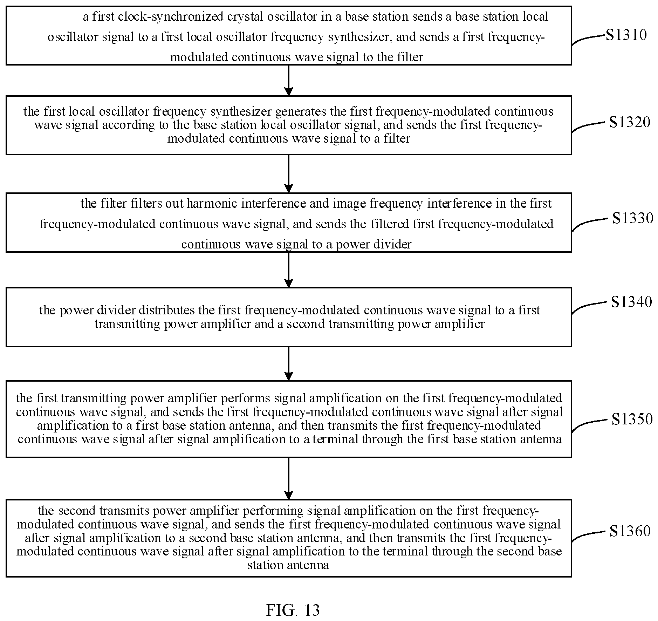

The first frequency-modulated continuous wave signal transmission method provided in Example 1 of the embodiment of the present application is performed based on the base station module schematic diagram provided in FIG. 10. Example 1: Referring to FIG. 13, which is a flowchart of the steps of transmitting the first frequency-modulated continuous wave signal provided in another embodiment of the present application, and the method includes but is not limited to the following steps:
In Step S1310, a first clock-synchronized crystal oscillator in a base station sends a base station local oscillator signal to a first local oscillator frequency synthesizer, and sends a first frequency-modulated continuous wave signal to a filter;
In Step S1320, the first local oscillator frequency synthesizer generates the first frequency-modulated continuous wave signal according to the base station local oscillator signal, and sends the first frequency-modulated continuous wave signal to a filter;
In Step S1330, the filter filters out harmonic interference and image frequency interference in the first frequency-modulated continuous wave signal, and sends the filtered first frequency-modulated continuous wave signal to a power divider;
In Step S1340, the power divider distributes the first frequency-modulated continuous wave signal to a first transmitting power amplifier and a second transmitting power amplifier;
In Step S1350, the first transmitting power amplifier performs signal amplification on the first frequency-modulated continuous wave signal, and sends the first frequency-modulated continuous wave signal after signal amplification to a first base station antenna, and then transmits the first frequency-modulated continuous wave signal after signal amplification to a terminal through the first base station antenna;
In Step S1360, the second transmitting power amplifier performs signal amplification on the first frequency-modulated continuous wave signal, and sends the first frequency-modulated continuous wave signal after signal amplification to a second base station antenna, and then transmits the first frequency-modulated continuous wave signal after signal amplification to the terminal through the second base station antenna.

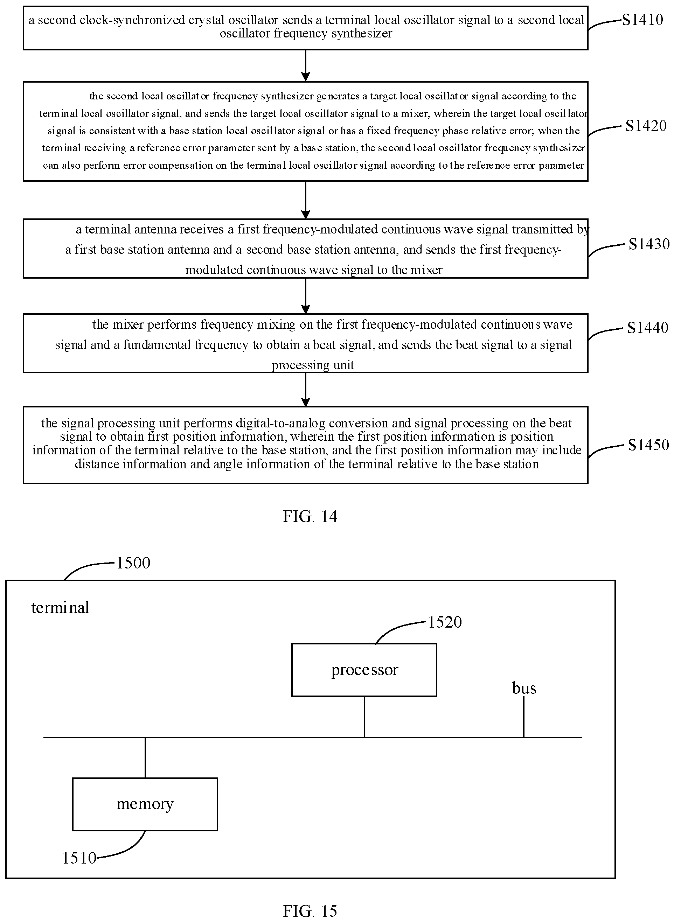

The first location information acquisition method provided in Example 2 of the present application is performed based on the terminal module schematic diagram provided in FIG. 11. Example 1: Referring to FIG. 14, which is a flowchart of steps of acquiring first location information provided in another embodiment of the present application. The method includes but is not limited to the following steps:
In Step S1410, a second clock-synchronized crystal oscillator sends a terminal local oscillator signal to a second local oscillator frequency synthesizer;
In Step S1420, the second local oscillator frequency synthesizer generates a target local oscillator signal according to the terminal local oscillator signal, and sends the target local oscillator signal to a mixer, wherein the target local oscillator signal is consistent with a base station local oscillator signal or has a fixed frequency phase relative error; when the terminal receives a reference error parameter sent by a base station, the second local oscillator frequency synthesizer can also perform error compensation on the terminal local oscillator signal according to the reference error parameter;
In Step S 1430, a terminal antenna receives a first frequency-modulated continuous wave signal transmitted by a first base station antenna and a second base station antenna, and sends the first frequency-modulated continuous wave signal to the mixer;
In Step S1440, the mixer performs frequency mixing on the first frequency-modulated continuous wave signal and a fundamental frequency to obtain a beat signal, and sending the beat signal to a signal processing unit;
In Step S1450, the signal processing unit performs digital-to-analog conversion and signal processing on the beat signal to obtain first position information, wherein the first position information is position information of the terminal relative to the base station, and the first position information may include distance information and angle information of the terminal relative to the base station.

In addition, referring to FIG. 15, which is a structural diagram of a terminal 1500 provided in another embodiment of the present application. An embodiment of the present application further provides a terminal 1500, which includes: a memory 1510, a processor 1520, and a computer program stored in the memory 1510 and executable on the processor 1520.

The processor 1520 and the memory 1510 may be connected via a bus or other means.

The non-transient software programs and instructions required to implement the positioning method of the above embodiment are stored in the memory 1510. When executed by the processor 1520, the positioning method applied to the terminal 1500 in the above embodiment is executed, for example, the method steps S110 to S130 in FIG. 1, the method steps S210 to S220 in FIG. 2, the method step S310 in FIG. 3, the method steps S410 to S430 in FIG. 4, the method steps S510 to S530 in FIG. 5, and the method steps S610 to S640 in FIG. 6 described above are executed.

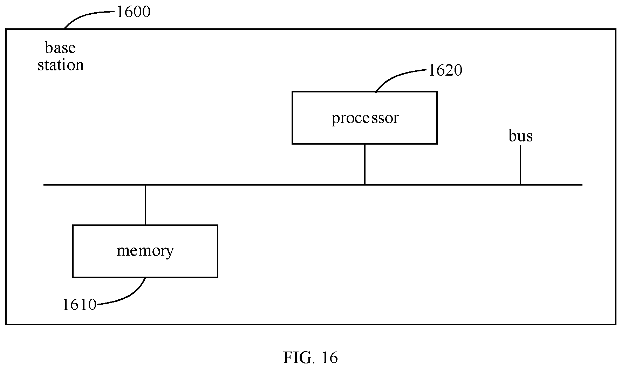

In addition, referring to FIG. 16, which is a structural diagram of a base station 1600 provided by another embodiment of the present application. An embodiment of the present application further provides a base station 1600, which includes: a memory 1610, a processor 1620, and a computer program stored on the memory 1610 and executable on the processor 1620.

The processor 1620 and the memory 1610 may be connected via a bus or other means.

The non-transient software program and instructions required to implement the positioning method of the above embodiment are stored in the memory 1610. When executed by the processor 1620, the positioning method applied to the base station 1600 in the above embodiment is executed, for example, the method steps S710 to S730 in FIG. 7, the method step S810 in FIG. 8, and the method steps S910 to S920 in FIG. 9 described above are executed.

The device embodiments described above are merely illustrative, in which the units described as separate components may or may not be physically separated, that is, they may be located in one place, or they may be distributed on multiple network units. Some or all of the modules may be selected according to actual needs to achieve the purpose of the scheme of this embodiment.

In addition, an embodiment of the present application further provides a computer-readable storage medium, which stores computer-executable instructions, which are executed by a processor or controller, for example, by a processor 1520 in the above-mentioned terminal 1500 embodiment, so that the above-mentioned processor 1520 can execute the positioning method applied to the terminal 1500 in the above-mentioned embodiment, for example, execute the method steps S110 to S130 in FIG. 1, the method steps S210 to S220 in FIG. 2, the method step S310 in FIG. 3, the method steps S410 to S430 in FIG. 4, the method steps S510 to S530 in FIG. 5, and the method steps S610 to S640 in FIG. 6 described above, or executed by a processor 1620 in the above-mentioned base station 1600 embodiment, so that the above-mentioned processor 1620 can execute the positioning method applied to the base station 1600 in the above-mentioned embodiment, for example, execute the method steps S710 to S730 in FIG. 7, the method step S810 in FIG. 8, and the method steps S910 to S920 in FIG. 9 described above.

The embodiments of the present application include: acquiring a first frequency-modulated continuous wave signal and a reference error parameter sent by a base station; acquiring a terminal local oscillator signal, and performing error compensation on a terminal local oscillator signal according to the reference error parameter to obtain a target local oscillator signal; performing signal processing on the first frequency-modulated continuous wave signal and the target local oscillator signal to obtain first position information, wherein the first position information is position information of the terminal relative to the base station. Compared with the positioning scheme based on TOF ranging technology with low positioning accuracy in the related art, the embodiment of the present application can realize the positioning of the terminal only based on the frequency-modulated continuous wave signal sent by the receiving base station and the terminal local oscillator signal of the terminal itself. Further, with the reference error parameter sent to the terminal by the base station, the error of the terminal local oscillator signal is reduced, and the accuracy of terminal positioning can be effectively improved.

It will be appreciated by those skilled in the art that all or some of the steps and systems in the methods disclosed above may be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on computer-readable media, which may include computer storage medium (or non-transitory medium) and communication medium (or transitory medium). As is known to those skill in the art, the term "computer storage media" includes volatile and non-volatile, removable and non-removable medium implemented in any method or technology for storing information (such as computer-readable instructions, data structures, program modules or other data). Computer storage medium include, but are not limited to, RAM, ROM, EEPROM, flash memory or other memory technology, CD-ROM, digital versatile disks (DVD) or other optical disk storage, magnetic cassettes, magnetic tapes, magnetic disk storage or other magnetic storage devices, or any other medium that can be used to store the desired information and can be accessed by a computer. In addition, it is well known to those skilled in the art that communication medium typically contains computer-readable instructions, data structures, program modules, or other data in a modulated data signal such as a carrier wave or other transport mechanism, and may include any information delivery medium.

## Claims

1. A positioning method, applied to a terminal, the terminal is communicated with a base station, the method comprises:
acquiring a first frequency-modulated continuous wave signal and a reference error parameter sent by a base station;
acquiring a terminal local oscillator signal, and performing error compensation on the terminal local oscillator signal according to the reference error parameter to obtain a target local oscillator signal;
performing signal processing on the first frequency-modulated continuous wave signal and the target local oscillator signal to obtain first position information, wherein the first position information is position information of the terminal relative to the base station.

2. The method of claim 1, wherein performing signal processing on the first frequency-modulated continuous wave signal and the target local oscillator signal to obtain the first position information, comprises:
performing frequency mixing on the first frequency-modulated continuous wave signal and the target local oscillator signal to obtain a beat signal;
obtaining the first position information according to the beat signal and a preset Doppler positioning algorithm.

3. The method of claim 1, wherein before performing signal processing on the first frequency-modulated continuous wave signal and the target local oscillator signal to obtain first position information, the method further comprises:
performing signal amplification on the first frequency-modulated continuous wave signal to obtain a first frequency-modulated continuous wave signal after the signal amplification.

4. The method of claim 1, wherein after performing signal processing on the first frequency-modulated continuous wave signal and the target local oscillator signal to obtain first position information, the method further comprises:
establishing a first coordinate system based on the first position information;
acquiring a preset virtual coordinate system;
mapping the first position information and the first coordinate system to the virtual coordinate system.

5. The method of any one of claims 1 to 4, wherein the terminal is communicated with at least two base stations, the method further comprises:
acquiring first frequency-modulated continuous wave signals and the reference error parameters sent by each base station;
performing error compensation on the terminal local oscillator signal according to each reference error parameter to obtain the target local oscillator signal;
performing signal processing on each first frequency-modulated continuous wave signal and each target local oscillator signal to obtain the first position information.

6. The method of claim 5, wherein after performing signal processing on each first frequency-modulated continuous wave signal and each target local oscillator signal to obtain the first position information, the method further comprises:
establishing a first coordinate system based on each first position information;
performing weighted averaging on each first position information to obtain target position information;
performing weighted averaging on each first coordinate system to obtain a target coordinate system;
mapping the target position information and the target coordinate system to the virtual coordinate system.

7. A positioning method, applied to a target base station, the target base station is respectively communicated with a terminal and a calibration device, the method comprises:
acquiring a base station local oscillator signal of the target base station, and performing signal processing on the base station local oscillator signal to obtain a first frequency-modulated continuous wave signal;
obtaining a reference error parameter from the calibration device according to the first frequency-modulated continuous wave signal;
sending the first frequency-modulated continuous wave signal and the reference error parameter to the terminal, causing the terminal to perform error compensation on a terminal local oscillator signal according to the reference error parameter to obtain a target local oscillator signal, and to perform signal processing on the first frequency-modulated continuous wave signal and the target local oscillator signal to obtain first position information, wherein the first position information is position information of the terminal relative to the target base station.

8. The method of claim 7, wherein the calibration device is also connected to at least one available base station, obtaining a reference error parameter from the calibration device according to the first frequency-modulated continuous wave signal, comprises:
sending the first frequency-modulated continuous wave signal to the calibration device, causing the calibration device to determine a first error parameter for the first frequency-modulated continuous wave signal, perform weighted averaging on the first error parameter and at least one second error parameter to obtain the reference error parameter, and send the reference error parameter to the target base station, wherein the second error parameter is an error parameter of a second frequency-modulated continuous wave signal sent to the calibration device for the available base station.

9. The method of claim 7, wherein before sending the first frequency-modulated continuous wave signal and the reference error parameter to the terminal, the method further comprises:
filtering the first frequency-modulated continuous wave signal according to a preset signal filtering rule to obtain a filtered first frequency-modulated continuous wave signal;
performing signal amplification on the filtered first frequency-modulated continuous wave signal to obtain a first frequency-modulated continuous wave signal after signal amplification.

10. A terminal, comprising a memory, a processor and a computer program stored in the memory and executable on the processor, and when executed by the processor, causing the processor to implement the positioning method according to any one of claims 1 to 6.

11. A base station, comprising a memory, a processor and a computer program stored in the memory and executable on the processor, and when executed by the processor, causing the processor to implement the positioning method according to any one of claims 7 to 9.

12. A computer readable storage medium, having a computer-executable instruction stored thereon, wherein the computer-executable instruction is used to implement the positioning method according to any one of claims 1 to 6, or implement the positioning method according to any one of claims 7 to 9.
